# EUROPÄISCHE PATENTANMELDUNG

(11) **EP 2 915 575 A1**
(43) Veröffentlichungstag der Anmeldung: **09.09.2015**
(21) Anmeldenummer: 14158095.1
(22) Anmeldetag: 06.03.2014
(51) Int. Cl.: B01D 47/06, B05B 15/12

(54) **Verfahren zum Abscheiden von Lackpartikeln aus einem Luftstrom sowie Anlage hierzu**

(71) Anmelder: Sturm Maschinen- & Anlagenbau GmbH, 94330 Salching (DE)
(72) Erfinder:
(74) Vertreter: Wunderlich, Rainer

(57) **Zusammenfassung**

Die Erfindung betrifft ein Verfahren sowie eine Anlage zum Abscheiden von Lackpartikeln aus einem Luftstrom, insbesondere aus einer Beschichtungsanlage (2), wobei der Luftstrom (5) einer Trenneinrichtung zugeführt wird, in welcher die Lackpartikel aus der Luft abgetrennt werden. Dabei werden in den Luftstrom Eiskristallteilchen (1) zum Binden und/oder Agglomerieren der Lackpartikel eingedüst.

## Beschreibung

Die Erfindung betrifft ein Verfahren zum Abscheiden von Lackpartikeln aus einem Luftstrom gemäß dem Oberbegriff des Anspruchs 1 sowie eine Anlage hierzu nach dem Oberbegriff des Anspruchs 10.

Bei der Serienfertigung von Kraftfahrzeug wird bei der Lackierung trotz vieler Optimierungen ein erheblicher Teilstrom des Lackes nicht auf die Karosserie des Kraftfahrzeuges aufgetragen. Je nach der Art des Auftragungsverfahrens kann diese Menge bis zu 50% des Lackausflusses betragen. Der betreffende Anteil, welcher Lackoverspray genannt wird, wird in der Lackierkabine vom Luftstrom erfasst und einem Abscheider zugeführt. Die derzeitigen Verfahren aus dem Stand der Technik weisen allerdings neben hohen Betriebs-, Energie- und Investitionskosten eine hohe Komplexität der Verfahrenstechnik auf.

Die DE 10 2010 041 552 A1 beschreibt ein Verfahren basierend auf einem Durchlassfilterprinzip, wobei der mit Lackpartikeln kontaminierte Luftstrom durch einen Filter mit geeigneter Porenweite geführt wird. Um eine Verschmutzung des Filters zu vermeiden, wird dieser mit einem Hilfsmaterial, beispielsweise Steinmehl, beaufschlagt. Dieses Additiv wird in einem Abscheideelement fluidisiert und kann sich an der Oberfläche des Filters ablagern. Hierbei verbindet sich das Overspraymaterial in erster Linie mit dem Steinmehl, so dass eine Verschmutzung des Filters verringert wird. Wenn die Filterbeladung entsprechend hoch ist und die Druckdifferenz zunimmt, wird der Filter mit Druckluft gereinigt. Ist die maximale Beladung des Steinmehls mit Lackmaterial erreicht, wird es entsorgt und durch neues Material ersetzt.

Ein wesentlicher Nachteil dieses Verfahrens ist, dass das Steinmehl auf jedes Lackmaterial spezifisch ausgelegt und abgestimmt sein muss und somit hohe Kosten bei dessen Herstellung sowie der Entsorgung nach der Verwendung entstehen. Insbesondere die Entsorgung ist hierbei unter umwelttechnischen Gesichtspunkten problematisch. Zudem ist aufgrund der beweglichen Teile im Abscheider die Wartung und Instandhaltung problematisch und im Störfall besteht eine hohe Gefahr der Kabinenverschmutzung. Darüber hinaus ist der Strom- und Druckluftverbrauch sehr hoch.

Die DE 10 2007 036 553 A1 offenbart ein Verfahren, welches auf dem Prinzip der elektrostatischen Abscheidung beruht. Der kontaminierte Luftstrom wird hierbei durch ein Abscheidemodul, das aus einem unter Hochspannung stehenden und einem geerdeten Element besteht, geleitet. Dabei werden die Lackpartikel aufgeladen und durch das gerichtete elektrische Feld zu der geerdeten Platte hingezogen. Ein Kühlmittel durchströmt die geerdete Platte, wodurch eine Kristallisation des sich im Luftstrom befindenden Wassers auf der Oberfläche der Abscheideplatte bewirkt wird. Die dabei gebildete Eisschicht bindet die Lackpartikel und wirkt somit einem Verkleben entgegen. Um die Platte zu reinigen wird diese mit einem erwärmten Kühlmedium durchströmt, so dass das Lack-Schmelzwasser-Gemisch in eine darunter liegende Auffangwanne abfließen kann.

Dieses Verfahren ist ebenfalls kostenintensiv und komplex und erfordert einen hohen Verbrauch an Verbrauchsmaterial für die Kühlmittelversorgung und das Hochspannungsmodul. Zudem besteht ein hoher Wartungs- und Instandhaltungsaufwand sowie eine Gefahr durch Hochspannung und Leckage der Kühlmittelversorgung. Ferner ist für die Erzeugung der Hochspannung und der Plattenkühlung ein hoher Strombedarf erforderlich.

Die DE 10 2010 051 085 A1 beschreibt ein Verfahren, wobei der mit Lackoverspray kontaminierte Luftstrom aus den Fahrzeuglackierkabinen an einem quer zur Strömungsrichtung verlegten Rohrbündel vorbeigeleitet wird, welches nicht nur elektrostatisch aufgeladen, sondern dessen zusätzliche Oberfläche zudem mit einem Haftmaterial beschichtet ist. Die Anlage wird über eine längs den Rohren verschiebbare Lochplatte, welche die angelagerte Schicht aus Lackpartikeln abschabt, gereinigt.

Auch dieses Verfahren erfordert für die Kühlmittelversorgung und das Hochspannungsmodul eine teure und komplexe Verfahrenstechnik sowie einen hohen Wartungs- und Instandhaltungsaufwand, insbesondere für die im Luftkanal angeordneten mit Haftpartikeln beladenen beweglichen Teile. Zudem ist für die statische Aufladung und die Kühlung ein hoher Energiebedarf notwendig.

Der Erfindung liegt daher die **Aufgabe** zugrunde, ein Verfahren zum Abscheiden von Lackpartikeln aus einem Luftstrom bereitzustellen, welches besonders wirtschaftlich und zugleich mit geringem Aufwand durchführbar ist. Weiter ist es Aufgabe der Erfindung, eine derartige Anlage bereitzustellen.

Nach der Erfindung wird die Aufgabe durch ein Verfahren zum Abscheiden von Lackpartikeln aus einem Luftstrom, insbesondere aus einer Beschichtungsanlage, mit den Merkmalen des Anspruchs 1 beziehungsweise eine Anlage mit den Merkmalen des Anspruchs 10 gelöst. Bevorzugte Ausführungsformen der Erfindung sind in den jeweils abhängigen Ansprüchen angegeben.

Ausgehend von einem Verfahren zum Abscheiden von Lackpartikeln aus einem Luftstrom, insbesondere aus einer Beschichtungsanlage, wobei der Luftstrom einer Trenneinrichtung zugeführt wird, in welcher die Lackpartikel aus der Luft abgetrennt werden, ist es gemäß der Erfindung vorgesehen, dass in den Luftstrom Eiskristallteilchen zum Binden und/oder Agglomerieren der Lackpartikel eingedüst werden.

Die Erfindung beruht dabei auf der Erkenntnis, dass die Partikelgrößen des Overspraylackmaterials für eine effektive Abtrennung häufig zu klein sind. Dies gilt etwa für Trägheitsabscheider, die einer Mindestmasse der Partikel bedürfen. Durch das Eindüsen von Eiskristallteilchen in den Luftstrom wird erreicht, dass bei den Lackpartikeln in einer künstlich erzeugten Turbulenz durch eine gegenseitige Agglomeration durch Anlagern der Partikel an die Eiskristalle eine Volumen- und Massenzunahme erzeugt wird. Die dabei gebildeten größeren Partikel können so etwa in einem nachfolgenden Trägheitsabscheider oder in einem Filter mit größeren Filteröffnungen mit hoher Zuverlässigkeit abgeschieden werden.

Um eine besonders hohe Wirkung zu erzeugen und die Adhäsion des Lackmaterials zu reduzieren, werden in den mit Lackpartikeln kontaminierten Abluftstrom Eiskristallteilchen in Form von feinem Pulverschnee eingedüst. Bei einer entsprechend hohen Teilchendichte und Größe der Partikel steigt statistisch der Effekt der Teilchenagglomeration. Zudem erfüllt Wasserschnee die physikalisch-chemischen Voraussetzungen zur Vereinigung mit dem im Allgemeinen wasserbasierten Lackmaterial. Der somit gereinigte Luftvolumenstrom kann mittels Umluftverfahren und ohne weiteren nachträglichen Konditionierungsaufwand erneut dem Lackierprozess zugeführt werden.

Ein erheblicher Anteil der für die Erzeugung der Eiskristallteilchen aufgebrachten Energie führt zu Abwärme, welche zurückgewonnen und in dem Lackierprozess genutzt werden kann.

Bei gegenwärtigen Verfahren zur Serienlackierung wird die Luft erwärmt und muss anschließend mit Abscheidung der Overspraypartikel wieder gekühlt. Aufgrund der durch das Schnee- und Eismaterial eingebrachten Kälteenergie kann hierbei Kühlleistung eingespart werden. Aufgrund der einfachen Verfahrensführung nach der Erfindung kann eine erhebliche Energieeinsparung im Vergleich zu den herkömmlichen Technologien nach dem Stand der Technik erreicht werden. Diese kann bis über 50% betragen. Darüber hinaus kann das Schnee-Schmelzwasser-Lackmaterial nach einer entsprechenden Abtrennung wiederverwendet werden und eine aufwändige und kostenintensive Entsorgung kann entfallen. Zudem besteht im Störungsfall keine Gefahr einer Verschmutzung der Lackkabinen, da sowohl Lack als auch das verwendete Wasser kein Risiko für die Prozesstechnik darstellen.

Das erfindungsgemäße Verfahren ist insbesondere für die Verwendung in einem Lackierungsverfahren für Kraftfahrzeuge geeignet, kann jedoch ohne weiteres in allen Bereichen der Serienlackierung, beispielsweise für Haushaltswaren oder Möbel, in welchen eine Abscheidung des Lackoversprays vorgeschrieben ist, verwendet werden.

Es ist bevorzugt, wenn die Eiskristallteichen im Wesentlichen aus einem Fluid gebildet werden, das ausgewählt ist aus Wasser, Alkoholen, Ethern, Estern, Carbonsäuren, Kohlendioxid oder Mischungen davon.

Diese Verbindungen weisen eine geringere Dichte der festen Phase im Vergleich zur flüssigen Phase auf, so dass die entsprechenden Eispartikel eine erheblich größere Kollisionsoberfläche besitzen. Es kann auf diese Weise eine besonders effiziente Anlagerung von Lackpartikeln auf den Kristallteilchen dieser Verbindungen erfolgen. Zudem sind die entsprechenden Fluide kostengünstig im großtechnischen Maßstab zu erwerben. Die entsprechende Verfahrenstechnik zur Umwandlung der fluiden Phase in den Festkörper ist bekannt und beruht auf ausgereiften Prozessschritten, welche auch unter energetischen Gesichtspunkten weitgehend optimiert sind. Zudem weisen die Moleküle dieser Fluide eine hinreichend große Polarität auf, um sich mit dem in der Regel wasserbasierten Lackmaterial zu vermischen.

Geeigneterweise werden dem Fluid weitere Additive, insbesondere zur Änderung des Schmelzpunktes, der Viskosität oder der Benetzungseigenschaften zugesetzt.

Durch eine Absenkung des Schmelzpunktes kann eine Verringerung des Energieaufwandes zum Abkühlen in den festen Zustand des Fluids erreicht werden. Durch eine geeignete Wahl der Viskosität kann dieses auf die betreffende Geometrie und Strömungsführung in der Beschichtungsanlage hin optimiert werden. Bei einer geringeren Viskosität reduzieren sich die Energieverluste durch die Strömungsreibung, während bei einer erhöhten Viskosität sich ein leichterer Übergang in den festen Zustand erreichen lässt. Die einzustellenden Benetzungseigenschaften richten sich an die Oberflächenbeschaffenheit der eingesetzten Beschichtungsanlage, insbesondere hinsichtlich deren Oberflächenrauigkeit sowie hydrophoben beziehungsweise hydrophilen Charakters. Zur Änderung der betreffenden physikalisch-chemischen Größen eignen sich organische oder anorganische Salze sowie oberflächenaktive Tenside.

Es ist vorteilhaft, wenn die Trenneinrichtung einen Filter oder eine Abscheidefläche aufweist, mit welcher die Eiskristallteilchen mit den Lackpartikeln in fester oder aufgeschmolzener Form aus dem Luftstrom abgetrennt werden.

Als Filtermaterialien können beispielsweise Siebe, Papierfilter, Glasfasern, Vliese, Keramikfilterelemente aus offenporiger Keramik, offenporige Sintermetallfilterelemente oder Nadelfilze verwendet werden. Nach der erfolgten Überführung der Eiskristallteilchen mit den Lackpartikeln in die flüssige Phase kann eine Trennung des betreffenden Gemisches in das die Kristallteilchen bildende Fluid und in das Lackmaterial erfolgen und beide Komponenten können wieder verwendet und in das Verfahren zurückgeführt werden. Bei Verwendung einer Abscheidefläche kann die applizierte Oberflächentemperatur dahingehend abgestimmt werden, dass die jeweiligen Phasen getrennt voneinander in den flüssigen Zustand überführt werden. Die Abscheidefläche kann glatt sein oder über eine erhöhte Oberflächenrauigkeit beziehungsweise andere Oberflächenstrukturierungen verfügen, um ein hohes Maß an Adsorptionsfläche den aufzufangenden Eiskristallteilchen mit den Lackpartikeln zur Verfügung zu stellen. Die Lack-Flüssigkeitsmischung lässt sich leicht von der Abscheidefläche entfernen.

Es ist bevorzugt, wenn eine Kühlfläche verwendet wird, an welcher aus der Flüssigkeit eine Eisschicht gebildet wird, welche zum Bilden der Eiskristallteilchen abgetrennt und zerkleinert wird.

Für diesen Verfahrensschritt eignen sich insbesondere mit Kühlmittel durchflossene Walzen in einem Wasserbad. Das Wasser gefriert an der Walzenoberfläche, wird mittels Bürsten oder einer Rakel abgetragen und unmittelbar in die erzeugte Turbulenz eingebracht. Die Partikelgröße kann hierbei durch die entsprechenden Prozessparameter wie Walzentemperatur und Drehgeschwindigkeit beeinflusst werden.

In einer weiteren bevorzugten Ausführungsform des erfindungsgemäßen Verfahrens werden die Eiskristallteilchen durch Versprühen der Flüssigkeit unter Wärmeentzug gebildet.

Im Falle von Wasser als verwendetem Fluid wird das zur Schneeproduktion benötigte Wasser komprimiert und auf unter 0°C abgekühlt, ohne dabei zu gefrieren. Mittels Ventilator und gekühlter Luft wird das unterkühlte Wasser fein zerstäubt und in einen Turbulenzbereich eingebracht. Dabei kristallisiert das Wasser bei Einbringung in den Agglomerationsbereich aus. Die Erzeugung der Schneekristalle und insbesondere der Kristallgröße kann gezielt und gesteuert erfolgen.

Diese Eigenschaften können durch eine definierte Einstellung von Druck, Temperatur und/oder relativer Luftfeuchtigkeit bewirkt werden. Bei Verwendung von Wasser als verwendetem Fluid hat sich ein Temperaturbereich von etwa 20 bis 25 °C und 60 bis 70% relativer Luftfeuchte als besonders geeignet erwiesen. Ferner ist zu berücksichtigen, dass aufgrund der großen Oberfläche der zahlreichen Schneekristalle es zu einer Schneeschmelze zwischen deren Einbringung und der Abscheidung in der Trenneinrichtung kommen wird, wodurch eine Feuchteerhöhung des Luftstroms zustande kommt. Dies kann eine nachträgliche Konditionierung der gereinigten Luft auf die Prozessbedingungen erfordern. Neben der Beeinflussung der Kristallgröße und Geometrie kann zusätzlich durch weitere chemische Hilfsmittel, wie beispielsweise sogenannten Snow-Inducern, die Nukleationstemperatur zur Bildung der Schneephase erhöht werden. Als Snow-Inducer sind insbesondere Proteine geeignet. An diesen Proteinen bilden sich kleine Eiskristalle als Kristallisationskeime, an denen weiteres Wasser angefriert. Je niedriger die relative Luftfeuchtigkeit ist, desto besser wirkt hierbei der Abkühlungsvorgang. Bei einer relativen Luftfeuchtigkeit von etwa 30% läuft dieser Schritt bereits bei 1 °C ab, während hingegen bei 80% relativer Luftfeuchtigkeit unter -3 °C erforderlich sind.

Es ist weiter vorteilhaft, wenn die Eiskristallteilchen elektrisch aufgeladen werden.

Die elektrische Aufladung kann entweder durch eine Ionisation in einem starken elektrischen Feld oder durch einen Beschuss mit elektrisch geladenen Teilchen erfolgen. Die elektrisch aufgeladen Eiskristallteilchen eignen sich besonders zur weiteren Agglomeration der polaren Lackpartikel. Ferner können die agglomerierten Partikel in einem elektrischen und/oder magnetischen Feld effizient aufgefangen werden.

In einer weiteren bevorzugten Ausführungsform des erfindungsgemäßen Verfahrens wird der Luftstrom vor der Zuführung der Trenneinrichtung zur Agglomeration der Lackpartikel vorbehandelt.

Auf diese Weise wird die Masse der Lackpartikel erhöht und eine nachfolgende Trennung der Lackpartikel vom Luftstrom kann in einer Trägheitsabscheideeinrichtung besonders effizient erfolgen. Neben einer Vorbehandlung zur Agglomeration der Lackpartikel kann auch eine Anpassung des Luftstromes hinsichtlich Strömungsgeschwindigkeit, Temperatur, Druck und relativer Luftfeuchtigkeit erfolgen. Die Strömungsrichtung und -geschwindigkeit des Luftstromes können bei einer größeren Partikelgröße definierter eingestellt werden, wobei eine einheitliche Strömungsrichtung und -geschwindigkeit ebenfalls zur Agglomeration der Lackpartikel beiträgt.

Es ist zweckmäßig, wenn die Vorbehandlung zur Agglomeration in einem Scherschichtkanal durchgeführt wird.

Dabei wird bei den Lackpartikeln in einer künstlich erzeugten Turbulenz durch eine gegenseitige Anlagerung, das heißt eine Agglomeration durch Partikelkollision, eine Volumen- und Massezunahme erzeugt, um sie in einer anschließenden Trägheitsabscheideeinrichtung, wo weitere Agglomerationseffekte erfolgen, vollständig abscheiden zu können. In einem Scherschichtkanal strömen zwei partikelbeladene Luftströmungen mit unterschiedlichen Geschwindigkeiten und mischen sich in einem nachfolgenden Mischungskanal. Aufgrund des unterschiedlichen Impulseintrages entsteht eine turbulente Scherschicht und es erfolgt ein turbulenter Mischungsvorgang. Dabei vermischen sich die Luft- und Partikelmassenströme miteinander und es findet der Agglomerationsvorgang statt. Maßgeblich für den Agglomerationsvorgang sind die Wechselwirkungen und Haftbedingungen zwischen den Lackpartikeln beziehungsweise den Lackpartikeln sowie den Eiskristallteilchen sowie die Kollisionswahrscheinlichkeit, welche wiederum von der Partikelgröße, der -dichte und der Strömungsgeschwindigkeit abhängt. Darüber hinaus können verschiedene Agglomerationsmechanismen existieren, welche wiederum den Agglomerationsvorgang und dessen Kinetik beeinflussen. Zur Steuerung des Agglomerationsprozesses sollten die Geschwindigkeitsverhältnisse der beiden Luftströmungen, die Partikelanzahl sowie die Partikelgrößenverteilung definiert sein. Die aus dem Mischungskanal austretenden an Masse und Volumen deutlich vergrößerten Partikel können dann nachfolgend in einer Trägheitsabscheideeinrichtung entsprechend ihrer Masse aufgetrennt und aufgefangen werden. Die so von den Lackpartikeln befreite Luft kann entweder ausgetragen oder erneut dem Verfahren als Reinluft zugeführt werden.

Gegenstand der Erfindung ist weiter eine Anlage zum Abscheiden von Lackpartikeln aus einem Luftstrom, insbesondere aus einer Beschichtungsanlage, wobei der Luftstrom über eine Zuführung einer Trenneinrichtung zuleitbar ist, in welcher die Lackpartikel aus der Luft abtrennbar sind. Bei der erfindungsgemäßen Anlage ist eine Eiserzeugungseinrichtung vorgesehen, durch welche Eiskristallteilchen erzeugbar sind, und an der Zuführung und/oder der Trenneinrichtung wenigstens eine Eindüseinheit angeordnet ist, mit welcher die Eiskristallteilchen in den Luftstrom einbringbar sind.

Die Eis- beziehungsweise Schneeproduktion kann auf verschiedene Weise erfolgen. Geeignet ist eine Schneeproduktion mit gekühlten Walzen, wobei mit Kühlmittel durchflossene Walzen in einem Wasserbad rotieren und das an der Walzenoberfläche gefrorene Wasser mittels Bürsten oder einer Rakel abgetragen wird. Daneben kann eine Schneeproduktion mit unterkühltem Wasser erfolgen, welches komprimiert und unter 0°C abgekühlt wird, ohne dabei zu gefrieren. Das unterkühlte Wasser wird in einer trockenen und gekühlten Luft fein zerstäubt und in den Luftstrom eingebracht. Dabei kann die Zerstäubung des unterkühlten Wassers auch unmittelbar mit der Eindüseinheit erfolgen. Die Zuführung des Luftstromes in die Trenneinrichtung kann sich besonders bevorzugt an einen Mischungskanal eines Scherschichtkanals anschließen, in welchem sich die aus der Vermischung der mit Schneepartikeln beziehungswese mit Overspraylackpartikeln beladene Luftströmungen agglomerierte Lackpartikel gebildet haben. Durch das Einbringen weiterer Eiskristallteilchen in den Luftstrom durch die Eindüseinheit erfolgen weitere Agglomerationsprozesse an den bereits eintretenden voragglommerierten Lackpartikeln. Zudem wird durch die eingedüsten Eiskristallteilchen eine Partikelhülle um die Overspraypartikel gebildet, wodurch die Gefahr eines Verklebens der Wände der Trenneinrichtung durch die anhaftenden Lackpartikel reduziert wird. Ort und Anordnung der Eindüseinheit richten sich nach der Eis- und Schneestabilität im Luftstrom sowie an den Ort der intensivsten Turbulenzentwicklung. Die Stabilität der Eis- oder Schneepartikel sowie deren Agglomerationscharakter kann neben den thermodynamischen Parametern wie Druck, Temperatur und relativer Luftfeuchtigkeit ferner über die Geometrie und Dimensionierung der Zuführung beeinflusst werden. Hierbei kann die geometrisch bedingte Turbulenzentwicklung mittels Strömungssimulationen an das Schneeverhalten angepasst werden. Eine optimale Geometrie des Scherschichtkanals sowie der Ort der Schneeeindüsung ist abhängig von Agglomerationscharakter, Schneestabilität und Turbulenzintensität.

In einer besonders bevorzugten Ausführungsform der erfindungsgemäßen Anlage weist die Trenneinrichtung eine Trägheitsabscheideeinrichtung, insbesondere einen Zyklon, auf.

Auf diese Weise können die vergrößerten agglomerierten Lackpartikel besonders effizient aus dem Luftstrom abgetrennt werden. Dabei ist die Abtrennung umso effektiver je größer die Masse der jeweiligen Lackpartikel ist und daher ist beim Eintritt in die Trenneinrichtung eine möglichst große Masse der Partikel anzustreben. Andererseits darf die Masse der Partikel auch nicht zu groß sein, um noch in dem Luftstrom mittransportiert zu werden. Mittels eines Zyklons können besonders hohe Fluidgeschwindigkeiten zur Erreichung eines optimalen Trenngrades erreicht werden. Die Fluidgeschwindigkeit kann über die Geometrie des Zyklons sowie über die Differenzdrucke am Ein- und Ausgangs des Zyklons definiert an die Erfordernisse, das heißt insbesondere an die Dichte, Viskosität und Benetzungseigenschaften der Lackpartikel sowie an die thermodynamischen Parameter wie Druck und Temperatur sowie Feuchtigkeit des Luftstromes definiert eingestellt werden. Der mit den agglomerierten Lackpartikeln beladene Luftstrom tritt hierbei über eine Zuführung in den Zyklon ein und wird in eine dreidimensionale, turbulente Rotationsdrallströmung versetzt, wobei die Lackpartikel durch Wirkung der Zentrifugalkräfte nach außen gedrückt werden. Hierbei besteht die Gefahr, dass die Lackpartikel die Zyklonwände erreichen und diese verkleben könnten. Dem kann dadurch entgegengewirkt werden, dass eine Flüssigkeitshülle um die Overspraypartikel durch Eindüsen von Schneeflocken in den Zykloninnenraum gebildet wird. Die eingedüsten Schneepartikel können ihrerseits zusätzlich zu einer weiteren Agglomeration der Partikel beitragen. Die dabei gebildete niedrigviskose Suspension aus Schnee beziehungsweise Eis und Lackmaterial fließt durch eine untere zylindrische Konusöffnung aus dem Zyklon ab. Der von den Lackpartikeln befreite gereinigte Luftvolumenstrom kann durch ein zylindrisches Tauchrohr, welches zentral in den Zyklon hineinragt, ausgetragen werden. Sollte die ursprüngliche Reinigung des Luftstromes noch nicht ausreichen, so kann eine weitere Zyklonabscheideeinrichtung nachgeschaltet werden beziehungsweise auch eine Kaskade von Zyklonabscheideeinrichtungen vorgesehen sein.

Insgesamt ergibt sich daher eine Veränderung der Partikelgröße des Lackmaterials durch Agglomerationsvorgänge zum einen durch interne Prozesse in dem Zyklon sowie durch externe Verfahrensschritte wie in der Schneezugabe in einem vorgeschalteten Scherschichtkanal. Für die Zyklonabscheidung gilt es ein Optimum an Differenzdruck und Volumenstrom festzulegen, welches eine Funktion der Größe der Overspraypartikel ist. Hierbei können Greenfield- und Brownfield-Betrachtungen vorgenommen werden

Geeigneterweise ist an der Trenneinrichtung eine Sammeleinrichtung, insbesondere ein Filter oder eine Abscheidefläche, zum Auffangen der gebundenen oder agglomerierten Lackpartikel vorgesehen.

Bevorzugt ist die Sammeleinrichtung oberhalb des Schmelzpunktes des verwendeten Trägerfluids erhöht, so dass ein Aufschmelzen des Fluids am Filter oder Abscheidefläche erfolgen kann und ein Gemisch aus Fluid und Lackpartikelmaterial gebildet wird. Diese beiden Phasen können nachfolgend voneinander getrennt werden und separat voneinander aufbereitet sowie gegebenenfalls dem Verfahren erneut zugeführt werden. Das Filtermaterial oder das Material der Abscheidefläche sowie deren Oberflächeneigenschaften sollten in Abhängigkeit von der Polarität des Lackmaterials beziehungsweise des Trägerfluids geeignet gewählt werden. So ist bei polaren Materialien eine hydrophile Oberfläche zu bevorzugen, während bei apolaren Substanzen eine hydrophobe Oberfläche geeigneter ist. Dabei bildet sich auf der Sammeleinrichtung ein zusammenhängender Film der Lackpartikel beziehungsweise von Trägerfluidverbindungen, welche an einem geeigneten Ort definiert abfließen kann.

Weiter ist es vorteilhaft, wenn mehrere Eindüseinheiten vorgesehen sind, welche getrennt voneinander ansteuerbar sind.

Mit mehreren Eindüseinheiten kann im gleichen Zeitraum eine größere Menge von Schnee- und Eismaterial gleichmäßig in die Trenneinrichtung eingebracht werden. Zusätzlich verbessern die an verschiedenen Stellen auftretenden Einströmvorgänge die Turbulenz und Durchmischung in der Trenneinrichtung. Über eine Steuer- und Regeleinrichtung kann die Menge, Strömungsgeschwindigkeit sowie bei einer alternierenden Eindüsung die Frequenz des eingebrachten Eismaterials auf die jeweiligen Anforderungen, das heißt insbesondere Strömungsverhältnisse und Geometrie der Trenneinrichtung gezielt angepasst werden. Insbesondere kann es vorteilhaft sein, im Bereich der Zuführung des Luftstromes zunächst eine größere Menge an Schneematerial einzudüsen und in hinteren strömungsabwärtigen der Trenneinrichtung die Menge an eingebrachtem Schneematerial allmählich zu reduzieren.

Die Erfindung wird nachfolgend anhand eines schematischen Ausführungsbeispiels unter Bezugnahme auf die Zeichnungen noch näher erläutert. Gleiche Bezugszeichen bezeichnen dabei gleiche Elemente.

Es zeigt:
- Fig.1: ein schematisches Blockdiagramm des erfindungsgemäßen Verfahrens;
- Fig. 2: einen Querschnitt durch die Trenneinrichtung; und
- Fig. 3: einen Querschnitt durch einen Scherschichtkanal der erfindungsgemäßen Anlage.

Es sind verschiedene Ausführungsformen des erfindungsgemäßen Verfahrens und der erfindungsgemäßen Anlage denkbar. Im Folgenden wir eine bevorzugte Ausführungsform beschrieben.

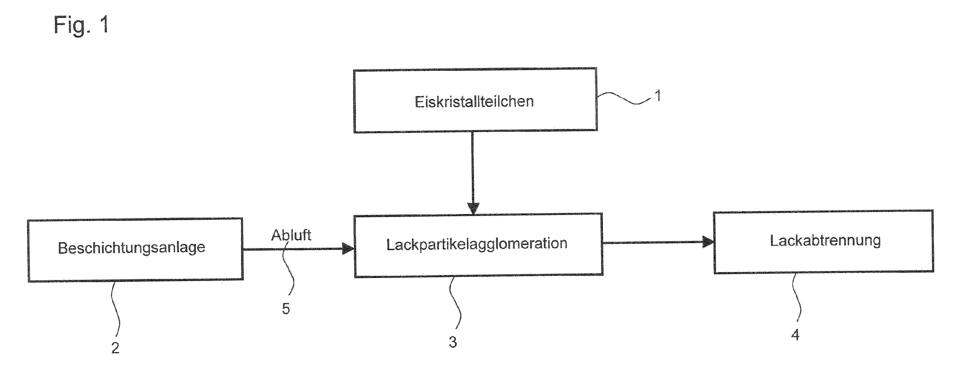

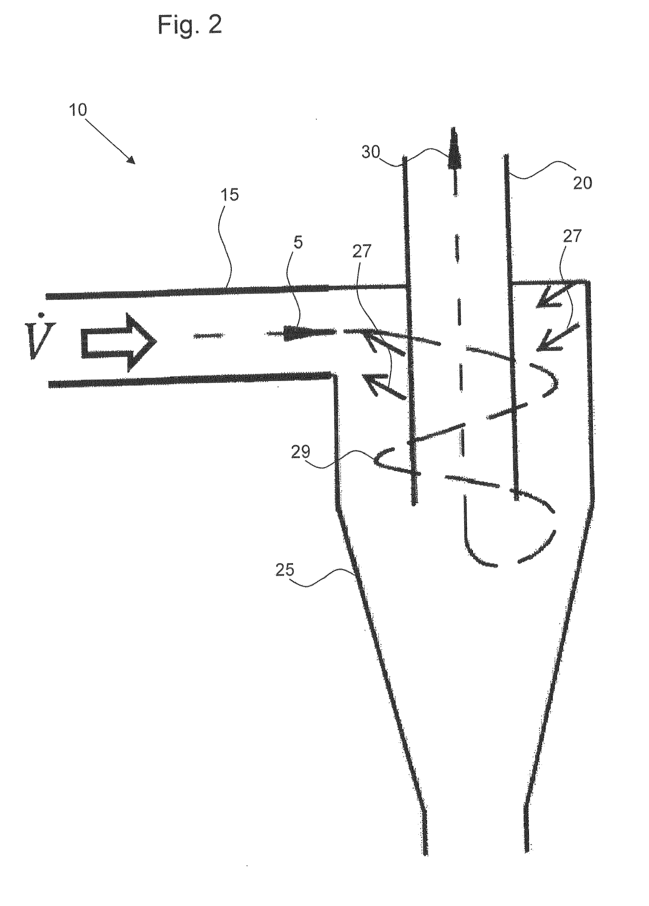

In dem in Fig. 1 schematisch dargestellten Ablaufdiagramm wird Abluft 5, welche mit Overspraylackpartikeln 43 beladen ist, aus einer Beschichtungsanlage 2, beispielsweise für die Beschichtung von Kraftfahrzeugen, Haushaltswaren oder Möbeln, mit einem Strom von Eiskristallteilchen 1 zusammengeführt, um durch eine Adsorption der Lackpartikel 43 auf den Eiskristallteilchen 1 eine Lackpartikelagglomeration 3 zu bewirken. Die Eiskristallteilchen 1 weisen eine sehr hohe spezifische Oberfläche im Vergleich zu ihrer Masse auf und können daher auf ihrem Strömungsweg eine große Anzahl von Overspraylackpartikeln 43 adsorbieren. Diese werden auf der Oberfläche gebunden und können sich teilweise zu größeren Agglomeraten verbinden. Die mit den agglomerierten Lackpartikeln 43 beladenen Eiskristallteilchen 1 werden anschließend zur Lackabtrennung 4 weiterbehandelt. Die Lackabtrennung 4 kann beispielsweise durch Aufschmelzen der Eiskristallteilchen 1, wobei eine Phasenseparation in Wasser und Lackmaterial stattfindet, erfolgen. Bei Lackmaterial auf Wasserbasis wird das Gemisch aus Schmelzwasser und Lackmaterial entsorgt. In der in Fig. 2 gezeigten Trenneinrichtung 10 strömt die mit Lackpartikeln 43 beladene Abluft 5 über eine Zuführung 15 in die als Zyklon ausgebildete Trenneinrichtung 10 ein. Aufgrund der Zyklongeometrie wird die Abluft 5 um das zentral in den Zyklon ragende Tauchrohr 20 in eine dreidimensionale turbulente Rotationsdrallströmung 29 versetzt. An verschiedenen Stellen innerhalb des Zyklons erfolgt eine Schneeeindüsung 27, wodurch eine Hülle aus Schneepartikeln 44 um die Lackpartikel 43 gebildet wird. An den eingedüsten Schneepartikeln 44 lagern sich die Lackpartikel 43 durch Adsorption an, und es findet ein Agglomerationsvorgang statt, wodurch sich die Masse der Partikel bestehend aus Lack- und Eismaterial vergrößert. Aufgrund der vergrößerten Masse der agglomerierten Lackpartikel 43 werden diese durch Zentrifugalkräfte, welche durch die Rotationsdrallströmung entstehen, in den Außenbereich der Strömung gedrückt und gleichzeitig verbleibt die gereinigte Luft 30 im Strömungsinneren und wird über das Tauchrohr 20 abgeführt. Die mit Lackpartikeln 43 beladenen Schneepartikel 44 haften an der Innenwand des Konus 25 an, und können als eine niedrigviskose Suspension durch die untere zylindrische Konusöffnung abfließen.

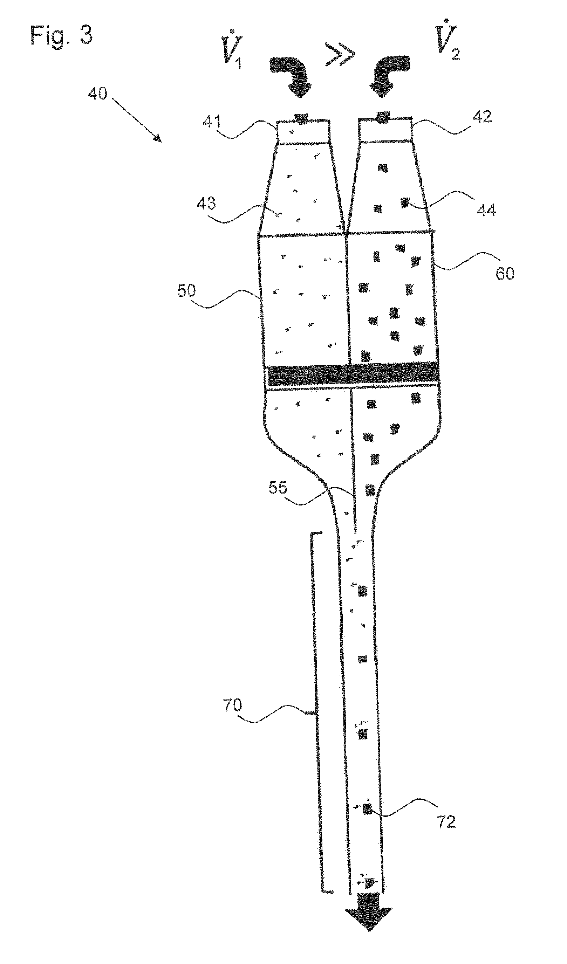

Der Zuführung 15 ist ein Scherschichtkanal 40 vorgeschaltet, welcher im Querschnitt in Fig. 3 gezeigt ist. Der Scherschichtkanal 40 besteht aus zwei Einheiten, einem Lackpartikelströmungskanal 50 sowie einem Schneepartikelströmungskanal 60. Die Lackpartikel 43 treten über den Lackpartikeleintritt 41 in den Lackpartikelströmungskanal 50 ein, während die Schneepartikel 44 über den Schneepartikeleintritt 42 in den Schneepartikelströmungskanal 60 eintreten. Dabei ist der Volumenstrom 1 der mit Lackpartikeln 43 beladenen Abluft 5 viel größer als der Volumenstrom 2 der mit Schneepartikeln 44 beladenen Luft. Die beiden Strömungskanäle 50, 60 sind über eine Trennwand 55 voneinander getrennt und vereinigen sich unter Verjüngung zu einem Mischungskanal 70, in welchen die beiden partikelbeladenen Luftströmungen mit unterschiedlichen Geschwindigkeiten eintreten und sich vermischen. Aufgrund des unterschiedlichen Impulseintrages entsteht eine turbulente Scherschicht und es findet ein turbulenter Vermischungsvorgang statt. Dabei vermischen sich Luft- und Partikelmassenströme miteinander und es findet ein Agglomerationsvorgang unter Bildung von mit Lackpartikeln beladenen Schneepartikeln 72 statt. Diese mit Lackpartikeln beladenen Schneepartikel 72 treten an dem Ende des Mischungskanals 70 aus und in die Zuführung 15 der Trenneinrichtung 10 ein, um dort abgetrennt zu werden.

## Patentansprüche

1. Verfahren zum Abscheiden von Lackpartikeln (43) aus einem Luftstrom (5), insbesondere aus einer Beschichtungsanlage (2), wobei der Luftstrom (5) einer Trenneinrichtung (10) zugeführt wird, in welcher die Lackpartikel (43) aus der Luft abgetrennt werden,
**dadurch gekennzeichnet,**
**dass** in den Luftstrom (5) Eiskristallteilchen (1) zum Binden und/oder Agglomerieren der Lackpartikel (43) eingedüst werden.

2. Verfahren nach Anspruch 1,
**dadurch gekennzeichnet,**
**dass** die Eiskristallteilchen (1) im Wesentlichen aus einer Flüssigkeit gebildet werden, die ausgewählt ist aus Wasser, Alkoholen, Ethern, Estern, Carbonsäuren, Kohlendioxid oder Mischungen davon.

3. Verfahren nach Anspruch 1 oder 2,
**dadurch gekennzeichnet,**
**dass** der Flüssigkeit weitere Additive, insbesondere zur Änderung des Schmelzpunktes, der Viskosität oder der Benetzungseigenschaften, zugesetzt werden.

4. Verfahren nach Anspruch 2 oder 3,
**dadurch gekennzeichnet,**
**dass** die Trenneinrichtung (10) einen Filter oder eine Abscheidefläche aufweist, mit welcher die Eiskristallteilchen mit den Lackpartikeln (43) in fester oder aufgeschmolzener Form aus dem Luftstrom (5) abgetrennt werden.

5. Verfahren nach einem der Ansprüche 1 bis 4,
**dadurch gekennzeichnet,**
**dass** eine Kühlfläche verwendet wird, an welcher aus der Flüssigkeit eine Eisschicht gebildet wird, welche zum Bilden der Eiskristallteilchen (1) abgetrennt und zerkleinert wird.

6. Verfahren nach einem der Ansprüche 1 bis 5,
**dadurch gekennzeichnet,**
**dass** die Eiskristallteilchen (1) durch Versprühen der Flüssigkeit unter Wärmeentzug gebildet werden.

7. Verfahren nach einem der Ansprüche 1 bis 6,
**dadurch gekennzeichnet,**
**dass** die Eiskristallteilchen (1) elektrisch aufgeladen werden.

8. Verfahren nach einem der Ansprüche 1 bis 7,
**dadurch gekennzeichnet,**
**dass** der Luftstrom (5) vor der Zuführung der Trenneinrichtung (10) zur Agglomeration der Lackpartikel (43) vorbehandelt wird.

9. Verfahren nach Anspruch 8,
**dadurch gekennzeichnet,**
**dass** die Vorbehandlung zur Agglomeration in einem Scherschichtkanal (40) durchgeführt wird.

10. Anlage zum Abscheiden von Lackpartikeln (43) aus einem Luftstrom (5), insbesondere aus einer Beschichtungsanlage (2), wobei der Luftstrom (5) über eine Zuführung (15) einer Trenneinrichtung (10) zuleitbar ist, in welcher die Lackpartikel (43) aus der Luft abtrennbar sind,
**dadurch gekennzeichnet,**
**dass** eine Eiserzeugungseinrichtung vorgesehen ist, durch welche Eiskristallteilchen (1) erzeugbar sind, und
**dass** an der Zuführung (15) und/oder der Trenneinrichtung (10) wenigstens eine Eindüseinheit (27) angeordnet ist, mit welcher die Eiskristallteilchen (1) in den Luftstrom (5) einbringbar sind.

11. Anlage nach Anspruch 10,
**dadurch gekennzeichnet,**
**dass** die Trenneinrichtung (10) eine Trägheitsabscheideeinrichtung, insbesondere ein Zyklon, ist.

12. Anlage nach Anspruch 11,
**dadurch gekennzeichnet,**
**dass** die Trenneinrichtung (10) einen Filter aufweist.

13. Anlage nach einem der Ansprüche 10 bis 12,
**dadurch gekennzeichnet,**
**dass** an der Trenneinrichtung (10) eine Sammeleinrichtung zum Aufifangen der gebundenen und/oder agglomerierten Lackpartikel (43) vorgesehen ist.

14. Anlage nach einem der Ansprüche 10 bis 13,
**dadurch gekennzeichnet,**
**dass** mehrere Eindüseinheiten (27) vorgesehen sind, welche getrennt voneinander ansteuerbar sind.

## Geänderte Patentansprüche

### Geänderte Patentansprüche gemäss Regel 137(2) EPÜ.

1. Verfahren zum Abscheiden von Lackpartikeln (43) aus einem Luftstrom (5), insbesondere aus einer Beschichtungsanlage (2), wobei der Luftstrom (5) einer Trenneinrichtung (10) zugeführt wird, in welcher die Lackpartikel (43) aus der Luft abgetrennt werden,
**dadurch gekennzeichnet,**
**dass** in den Luftstrom (5) Eiskristallteilchen (1) zum Binden und/oder Agglomerieren der Lackpartikel (43) eingedüst werden.

2. Verfahren nach Anspruch 1,
**dadurch gekennzeichnet,**
**dass** die Eiskristallteilchen (1) im Wesentlichen aus einer Flüssigkeit gebildet werden, die ausgewählt ist aus Wasser, Alkoholen, Ethern, Estern, Carbonsäuren, Kohlendioxid oder Mischungen davon.

3. Verfahren nach Anspruch 1 oder 2,
**dadurch gekennzeichnet,**
**dass** der Flüssigkeit weitere Additive, insbesondere zur Änderung des Schmelzpunktes, der Viskosität oder der Benetzungseigenschaften, zugesetzt werden.

4. Verfahren nach Anspruch 2 oder 3,
**dadurch gekennzeichnet,**
**dass** die Trenneinrichtung (10) einen Filter oder eine Abscheidefläche aufweist, mit welcher die Eiskristallteilchen mit den Lackpartikeln (43) in fester oder aufgeschmolzener Form aus dem Luftstrom (5) abgetrennt werden.

5. Verfahren nach einem der Ansprüche 1 bis 4,
**dadurch gekennzeichnet,**
**dass** eine Kühlfläche verwendet wird, an welcher aus der Flüssigkeit eine Eisschicht gebildet wird, welche zum Bilden der Eiskristallteilchen (1) abgetrennt und zerkleinert wird.

6. Verfahren nach einem der Ansprüche 1 bis 5,
**dadurch gekennzeichnet,**
**dass** die Eiskristallteilchen (1) durch Versprühen der Flüssigkeit unter Wärmeentzug gebildet werden.

7. Verfahren nach einem der Ansprüche 1 bis 6,
**dadurch gekennzeichnet,**
**dass** die Eiskristallteilchen (1) elektrisch aufgeladen werden.

8. Verfahren nach einem der Ansprüche 1 bis 7,
**dadurch gekennzeichnet,**
**dass** der Luftstrom (5) vor der Zuführung der Trenneinrichtung (10) zur Agglomeration der Lackpartikel (43) vorbehandelt wird.

9. Verfahren nach Anspruch 8,
**dadurch gekennzeichnet,**
**dass** die Vorbehandlung zur Agglomeration in einem Scherschichtkanal (40) durchgeführt wird.

10. Beschichtungsanlage zum Lackieren von Teilen mit einem Lack, wobei ein Abluft-Luftstrom (5) gebildet ist, welcher mit Lackpartikeln (43) beladen ist, und mit einer Vorrichtung zum Abscheiden von Lackpartikeln (43) aus dem Luftstrom (5), wobei der Luftstrom (5) über eine Zuführung (15) einer Trenneinrichtung (10) zuleitbar ist, in welcher die Lackpartikel (43) aus der Luft abtrennbar sind,
**dadurch gekennzeichnet,**
**dass** eine Eiserzeugungseinrichtung vorgesehen ist, durch welche Eiskristallteilchen (1) erzeugbar sind, und
**dass** an der Zuführung (15) und/oder der Trenneinrichtung (10) wenigstens eine Eindüseinheit (27) angeordnet ist, mit welcher die Eiskristallteilchen (1) in den Luftstrom (5) einbringbar sind.

11. Anlage nach Anspruch 10,
**dadurch gekennzeichnet,**
**dass** die Trenneinrichtung (10) eine Trägheitsabscheideeinrichtung, insbesondere ein Zyklon, ist.

12. Anlage nach Anspruch 11,
**dadurch gekennzeichnet,**
**dass** die Trenneinrichtung (10) einen Filter aufweist.

13. Anlage nach einem der Ansprüche 10 bis 12,
**dadurch gekennzeichnet,**
**dass** an der Trenneinrichtung (10) eine Sammeleinrichtung zum Auffangen der gebundenen und/oder agglomerierten Lackpartikel (43) vorgesehen ist.

14. Anlage nach einem der Ansprüche 10 bis 13,
**dadurch gekennzeichnet,**
**dass** mehrere Eindüseinheiten (27) vorgesehen sind, welche getrennt voneinander ansteuerbar sind.
